# EUROPEAN PATENT SPECIFICATION

(11) **EP 3 551 884 B1**
(45) Date of publication and mention of the grant of the patent: **15.07.2020**
(21) Application number: 17700317.5
(22) Date of filing: 09.01.2017
(51) Int. Cl.: F04B 37/00, F04B 37/10, F04B 39/06

(54) **ELECTRO HYDRO DYNAMIC APPARATUS AND SYSTEM COMPRISING AN ELECTRO HYDRO DYNAMIC APPARATUS**
ELEKTROHYDRODYNAMISCHE VORRICHTUNG UND SYSTEM MIT EINER ELEKTROHYDRODYNAMISCHEN VORRICHTUNG
APPAREIL ÉLECTRO-HYDRODYNAMIQUE ET SYSTÈME MUNI D'APPAREIL ÉLECTRO-HYDRODYNAMIQUE

(43) Date of publication of application: 16.10.2019
(73) Proprietor: Huawei Technologies Co., Ltd., Longgang District Shenzhen, Guangdong 518129 (CN)
(72) Inventor: LEKSELIUS, Niklas, 164 40 Kista (SE)
(74) Representative: Gill Jennings & Every LLP
(86) International application number: PCT/EP2017/050301
(87) International publication number: WO 2018/127293

(56) References cited:
- EP-A1- 2 163 514
- US-A1- 2005 169 778
- US-A1- 2010 052 540
- US-A1- 2011 174 468
- US-A1- 2011 308 775
- US-A1- 2016 079 840
- US-A1- 2016 146 483

## Description

### TECHNICAL FIELD

The invention relates to an electro hydro dynamic, EHD, apparatus and to a system comprising an electro hydro dynamic, EHD, apparatus.

### BACKGROUND

An Electro Hydro Dynamic, EHD, device is configured to generate airflow utilising ionised air. A high voltage is applied between two electrodes, which forms an electric field. The electric field ionises air. The ionised air is drawn towards one of the electrodes and is thus, accelerated. The accelerated air passes the one electrode and forms the airflow. Such an airflow may be utilised for cooling heat generating equipment. In such case an Electro Hydro Dynamic, EHD, cooling device may be referred to.

US 2016079840 discloses an Electro Hydro Dynamic, EHD, thruster comprising a first set of electrodes, a second set of electrodes, and a supporting structure for supporting the first set of electrodes and the second set of electrodes. The EHD thruster is configured to generate airflow of ionised air for cooling a heat sink. It is proposed that the EHD thruster is utilised to move air across the surface of the heat sink instead of utilising a rotating fan. The EHD thruster has no moving or rotating parts. A reliable and silent cooling mechanism is achieved for providing high capacity cooling of the heat sink. By keeping the EHD thruster electrically isolated from the heat sink, the risk of an accident is reduced. The heat sink may be thermally coupled to a power amplifier of a Remote Radio Unit, RRU.

The voltage between the electrodes of an EHD apparatus is close to the level for an electrical breakdown through the air between the electrodes. Accordingly, an EHD apparatus is dependent on a correct distance between the two electrodes in order to properly ionise air. If the EHD apparatus is used in an environment where water droplets may be present, such droplets may deposit on one or both electrodes reducing the electrical distance there between causing an electrical breakdown, which may take the form of an electric spark or an electric arc.

### SUMMARY

It is an object of the invention to prevent the forming of water droplets on at least one of the electrodes of an electro hydro dynamic, EHD, apparatus.

According to an aspect of the invention, the object is achieved by an electro hydro dynamic, EHD, apparatus, as defined in claim 1 comprising a first electrode and a second electrode, wherein the second electrode is arranged above the first electrode at a predetermined distance for generating an airflow. The second electrode comprises at least one electrode element. The at least one electrode element comprises a gap extending along a length of the at least one electrode element for capillary conducting water droplets along the at least one electrode element.

Since the at least one electrode element of the second electrode comprises a gap extending along a length of the at least one electrode element for capillary conducting water droplets along the at least one electrode element, water droplets are prevented from depositing on the at least one electrode element in a manner which would shorten an electrical distance between the first and second electrodes. Instead, water is conducted in the gap along the at least one electrode element, to an area of the second electrode where the water may be drained from the second electrode without causing electrical breakdown. As a result, the above mentioned object is achieved. Moreover, the EHD apparatus is thus, suited for use in humid environments where water droplets may form on the second electrode, or in environments where water droplets may be present, such as outdoors.

The electro hydro dynamic, EHD, apparatus is configured for generating the airflow utilising ionised air between the first and second electrodes. In use of the EHD apparatus, a high voltage is applied between the first and second electrodes, forming an electric field between the two electrodes. The electric field ionises the air in between the electrodes. The ionised air is drawn towards the second electrode and thus, accelerates air in between the two electrodes. The accelerated air passes the second electrode and forms the airflow. The first and second electrodes may comprise a conductive material, such as e.g. a metal. According to embodiments, the at least one electrode element may comprise a through slit forming the gap. In this manner, the gap may be easily manufactured, e.g. in a laser cutting operation.

According to embodiments, the at least one electrode element may comprise two separate members forming there between the gap. In this manner, the gap may be provided by positioning two separate members at a suitable distance from each other.

According to embodiments, the first electrode and the second electrode may extend along a first direction and the at least one electrode element may extend along a second direction across the first direction and wherein at least a portion of the gap may have a width in the first direction within a range of 0.1 - 0.5 mm. In this manner, a gap width suitable for providing capillary action on water droplets may be provided.

According to embodiments, the gap may widen towards at least one end of the gap. In this manner, the capillary action on the water in the gap may be reduced at the wide end of the gap. Thus, water may be drained from the wide end of the gap. Accordingly, water droplets may continuously or intermittently be drawn into the gap by the capillary action of the gap, and the water droplets may continuously or intermittently be drained at the wide end of the gap. The wide end of the gap may suitably be arranged at a distance from the first electrode such that the electrical distance between the first and second electrodes is not shortened by the water being drained from the wide end of the gap.

According to embodiments, the at least one electrode element may comprise at least a first electrode portion configured to be arranged at a first angle to a horizontal plane. In this manner, gravity may assist water in the gap to flow along the first electrode portion in the gap.

According to embodiments, the at least one electrode element may comprise a first electrode portion and a second electrode portion, and wherein the first and second electrode portions may be arranged at an obtuse angle to each other with a vertex of the obtuse angle pointing away from the first electrode. In this manner, gravity may assist water in the gap to flow along also the second electrode portion in the gap. The provision of the first and second electrode portions being arranged at the obtuse angle provide for the first and second electrode portions being symmetrically arranged in relation to the first electrode.

According to embodiments, the gap may widen towards a low end of the gap. In this manner, gravity may assist water in the gap to flow towards the wide end of the gap where the water is drained from the gap.

According to embodiments, the first electrode may comprise at least one protrusion extending in a direction towards the second electrode, setting a predetermined distance between the first and second electrodes for forming an electric field between the first and second electrodes configured to generate the airflow utilising ionised air. In this manner, the at least one protrusion may provide a well-defined portion of the first electrode where the electric field between the first and second electrodes will have its highest value.

According to embodiments, the second electrode may comprise a first electrode element and a second electrode element, wherein the first and second electrode elements may be arranged with an interspace there between for permitting the airflow to pass through the second electrode. In this manner, the electric field between the first and second electrodes may have the highest value at each of the first and second electrode elements for ionising air to generate the airflow during use of the EHD apparatus. The generated airflow may pass the second electrode through the interspace between the first and second electrode elements.

It is a further object of the invention to provide a system for outdoor use comprising an EHD apparatus, wherein the forming of water droplets on at least one of the electrodes of the EHD apparatus is prevented.

According to an aspect of the invention, the object is achieved by a system comprising heat generating electronic components, a heat sink thermally connected to the heat generating electronic components, and an electro hydro dynamic, EHD, apparatus according to any one of aspects and/or embodiments discussed herein arranged to generate an airflow in a flow direction along and/or through the heat sink. In this manner, the EHD apparatus directly cools the heat sink and indirectly cools the heat generating electronic components. Thus, the EHD apparatus forms an electoral hydrodynamic, EHD, cooling device of the system. Moreover, since the at least one electrode element of the second electrode comprises a gap extending along a length of the at least one electrode element, as discussed above, water droplets are prevented from depositing on the at least one electrode element. Thus, the system is suited for outdoor use where water droplets may be present. As a result, the above mentioned object is achieved.

The heat generating electronic components may for instance comprise a power amplifier of a Remote Radio Unit, RRU. Since the heat sink is thermally coupled to the power amplifier, the power amplifier may be indirectly cooled by the EHD apparatus.

According to embodiments, the heat sink may comprise a first heat sink part and a second heat sink part, and a compartment for holding the EHD apparatus for providing a push airflow in the flow direction along and/or through the first heat sink part and a pull airflow along and/or through the second heat sink part. In this manner, the airflow on both sides of the EHD apparatus may be utilised for providing the airflow a long and/or through both the first and second heat sink parts.

According to embodiments, the EHD apparatus may be open in the flow direction for enabling natural convection cooling of the heat sink. In this manner, cooling of the heat sink by natural convection is not obstructed by the EHD apparatus when the EHD apparatus is switched off.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Figs. 1a and 1b illustrate schematically cross sections through an electro hydro dynamic apparatus,
Figs. 2a - 2d illustrate an example of an electro hydro dynamic apparatus,
Figs. 3a and 3b illustrate examples of schematically portions of second electrodes,
Figs. 4a - 4c illustrate an another example of an electro hydro dynamic apparatus, and
Fig. 5 illustrates an example of a system comprising an electro hydro dynamic apparatus.

### DETAILED DESCRIPTION

Aspects and/or embodiments of the invention will now be described more fully. Like numbers refer to like elements throughout. Well-known functions or constructions will not necessarily be described in detail for brevity and/or clarity.

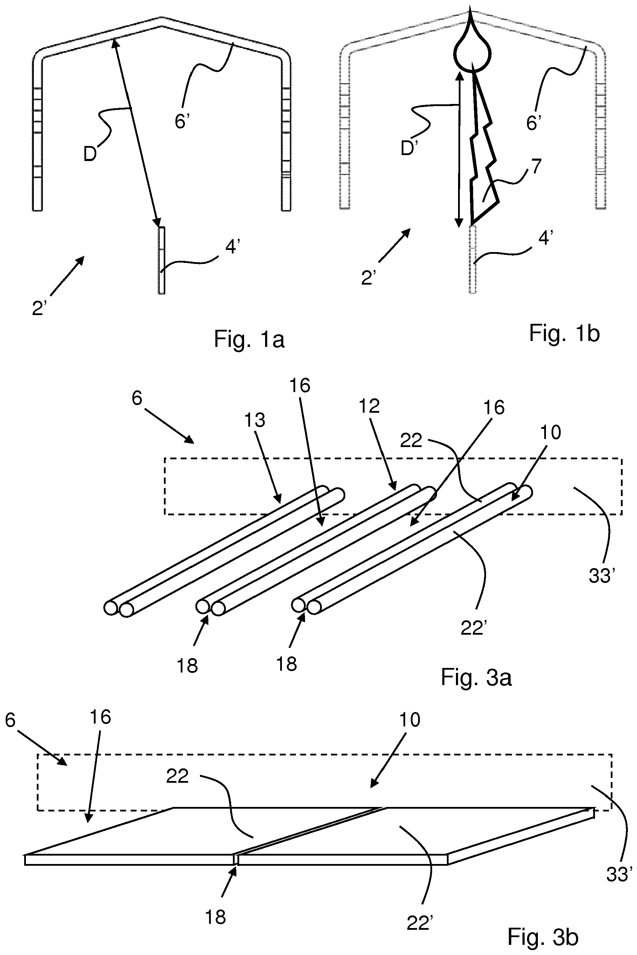

**Figs. 1a and 1b** illustrate schematically cross sections through an electro hydro dynamic, EHD, apparatus 2'. A high voltage is applied over a first electrode 4' and a second electrode 6'. The electrical distance D between the first and second electrodes 4', 6' is the shortest distance between the first and second electrodes 4', 6'. For the EHD apparatus 2' to be efficient, the electrical distance D should be as short as possible in relation to the applied voltage between the first and second electrodes 4', 6' without causing electrical breakdown.

A water droplet 5 hanging from a lower side of the second electrode 6'may shorten the original electrical distance D to a different electrical distance D' short enough to cause electrical breakdown, as indicated with the electric arc 7 in **Fig. 1b****.** Accordingly, the forming of water droplets in critical areas of the upper electrode is to be avoided.
The inventor has realised that capillary action may be utilised for preventing formation of water droplets on the upper electrode large enough for, and/or in places, causing electrical breakdown in the EHD apparatus. The use of capillary action is a cost efficient and reliable way of preventing the forming of water droplets on the electrode of the EHD apparatus.

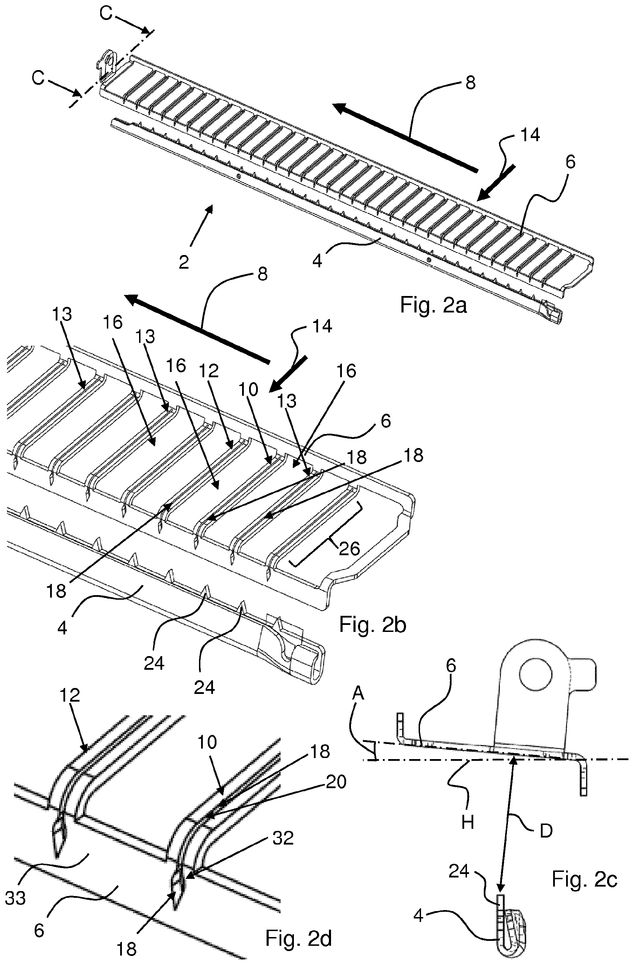

**Figs. 2a** - **2d** illustrate an example of an electro hydro dynamic, EHD, apparatus 2. **Fig. 2a** illustrates a view of the EHD apparatus 2, **Fig. 2b** illustrates a partial enlargement of the EHD apparatus 2, **Fig. 2c** illustrates a view along lines C - C in **Fig. 2a,** and **Fig. 2d** illustrates a partial enlargement of a second electrode 6 of the EHD apparatus 2. The EHD apparatus 2 comprises a first electrode 4 and the second electrode 6. The first and second electrodes 4, 6 may be arranged in a holding structure, not shown. The holding structure electrically isolates the first electrode 4 from the second electrode 6. The second electrode 6 is arranged above the first electrode 4. The first electrode 4 may be considered a high voltage emitter, and the second electrode 6 may form a grounded collector grid. During use of the EHD apparatus 2, the voltage applied over the first and second electrodes 4, 6 is very close to the voltage resulting in electrical breakdown between the first and second electrodes 4, 6. The high voltage forms an electric field which ionises the air in between the first and second electrodes 4, 6, which generates an airflow in a direction from the first electrode 4 towards the second electrode 6. Mentioned purely as an example, the voltage between the first and second electrodes 4, 6 may be within a range of 7 - 15 kV.

The second electrode 6 comprises at least one electrode element 10, 12. In particular, the second electrode 6 may comprise a first electrode element 10 and a second electrode element 12. More specifically, the second electrode may comprise a number of electrode elements 10, 12, 13. The electrode elements 10, 12, 13 are arranged with an interspace 16 between pairs of the electrode elements 10, 12, 13. During use of the EHD apparatus 2 the airflow is permitted to pass through the interspaces 16. Thus, the airflow is permitted to pass through the second electrode 6. Moreover, water droplets falling from above the second electrode 6 may fall through the interspaces 16, and the EHD apparatus 2 without affecting the function of the EHD apparatus 2.

The at least one electrode element 10, 12, and suitably each electrode element of the number of electrode elements 10, 12, 13, comprises a gap 18 extending along a length of the relevant electrode element 10, 12, 13. Water droplets depositing on the relevant electrode element 10, 12, 13 are drawn into the gap 18 by capillary action. Thus, the water droplets may be capillary conducted along the relevant electrode element 10, 12, 13 and electrical breakdown, otherwise caused by the water droplets, may be avoided.
The gap 18 in each of the electrode elements 10, 12, 13 may be formed by a through slit 20.

The second electrode 6 may be made from metal. Mentioned purely as an example, the second electrode 6 may be manufactured from sheet metal, such as e.g. stainless steel sheet metal. The sheet metal may have a thickness within a range of 0.3 - 5.0 mm. The second electrode 6 may be formed from sheet metal e.g. by punching, cutting, or laser cutting, and bending or pressing. The slit 20 in each electrode element 10, 12, 13 may e.g. be cut in a laser cutting operation. Similarly, the first electrode 4 may be manufactured from the same type of material and using the same manufacturing methods as the second electrode 6.

The first electrode 4 and the second electrode 6 extend along a first direction 8. The at least one electrode element 10, 12 extends along a second direction 14 across the first direction 8. In these embodiments the second direction 14 extends perpendicularly to the first direction 8. However, the second direction 14 may extend at a different angle across the first direction 8, such as at e.g. a 45° angle.

The width of the gap 18 may be within a range of 0.1 - 0.5 mm. More specifically, at least a portion of the gap 18 may have a width in the first direction 8 within a range of 0.1 - 0.5 mm. According to some embodiments the gap 18 may have a width within a range of 0.2 - 0.3 mm.

The gap 18 widens towards one end 32 of the gap 18. For instance, the one end 32 of the gap 18 may be one or more millimetres wide. The one end 32 of the gap 18 may also be referred to as the wide end 32 of the gap 18. The capillary action on any water in the gap 18 is reduced at the wide end 32 of the gap 18, and water may be drained from the gap 18 at its wide end 32. The wide end 32 of the gap 18 may be arranged within the electrode element 10, 12. Alternatively, and as illustrated in **Figs. 2b and 2d****,** the wide end 32 of the gap 18 may be arranged a common portion 33 of the second electrode 6, to which common portion 33 the electrode elements 10, 12 connect.

Each of the electrode elements 10, 12, 13 comprise a first electrode portion 26 configured to be arranged at a first angle A to a horizontal plane H, when the EHD apparatus 2 is in use. Thus, gravity may assist water in the gap 18 to flow along the first electrode portion 26 in the gap 18, towards a low end of the gap 18. At the low end of the gap 18 the wide end 32 of the gap 18 may drain the gap 18 from water. However, alternatively the gap 18 may simply extend all the way through the common portion 33 thus, forming a drainage opening at a lower end of the second electrode 6.

As mentioned above, the first electrode 4 extends in the first direction 8. Perpendicularly to the first direction 8 an extension of the first electrode 4 is limited, e.g. in the order of the 1 - 10 mm. Thus, the airflow passes the first electrode 4 without being hindered by the first electrode 4 to any larger extent. The first electrode 4 comprises one protrusion 24, extending in a direction towards the second electrode 6, for each electrode element 10, 12, 13. Between one protrusions 24 and a corresponding electrode element 10, 12, 13 a predetermined distance is set. The predetermined distance suitably forms the electrical distance D between the first and second electrodes 4, 6 of the EHD apparatus 2. Thus, the electric field between the first and second electrodes 4, 6 has its highest values in positions having the electrical distance D there between. Mentioned purely as an example, the electrical distance D may be e.g. 15 mm. The voltage applied between the first and second electrodes 4, 6 may in such case be approximately 15 kV.

**Fig. 3a** illustrates schematically a portion of a second electrode 6 as an alternative example. Each of the electrode elements 10, 12, 13 comprises two separate members 22, 22' forming there between the gap 18. Again, the gap 18 has a width such that water will be drawn into the gap 18 by capillary action. In these embodiments, each of the two separate members 22, 22' comprises a rod. The separate members 22, 22' are connected to a common portion 33' of the second electrode 6. Similarly, a further common portion (not shown) may be connected to the opposite ends of the separate members 22, 22'. Interspaces 16 for passage of an airflow are formed between the electrode elements 10, 12, 13.

**Fig. 3b** illustrates schematically a portion of a second electrode 6 as another example. Again, the electrode elements 10 comprise two separate members 22, 22' forming there between the gap 18. In **Fig. 3b** only one of the electrode elements 10 is shown. Again, the gap 18 has a width such that water will be drawn into the gap 18 by capillary action. In these embodiments, each of the two separate members 22, 22' comprises a flat member. Again, the separate members 22, 22' are connected to a common potion 33' of the second electrode 6. Interspaces 16 for passage of an airflow are formed between the electrode elements 10. In **Fig. 3b** one of the interspaces is indicated adjacent to one of the separate members 22.

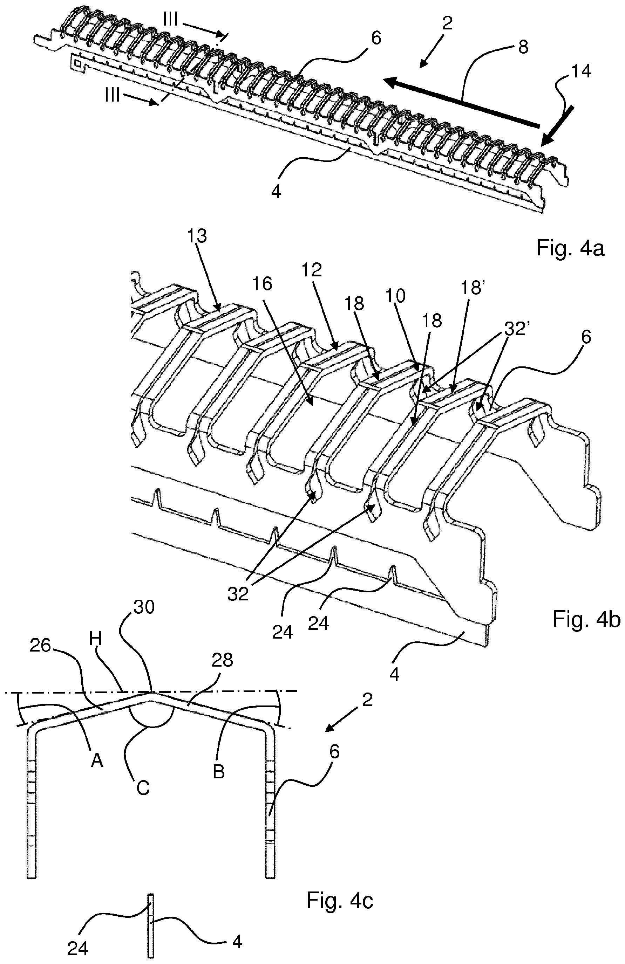

**Figs. 4a - 4c** illustrate another example of an electro hydro dynamic, EHD, apparatus 2. **Fig. 4a** illustrates a view of the EHD apparatus 2, **Fig. 4b** illustrates a partial enlargement of the EHD apparatus 2, and **Fig. 4c** illustrates a cross section along lines III - III in **Fig. 4a****.** These embodiments resemble in much the embodiments of **Figs. 2a - 2d****.** Accordingly, in the following mainly the differences to the embodiments of **Figs. 2a - 2d** will be discussed.

Again, the EHD apparatus 2 comprises a first electrode 4 and the second electrode 6 extending along a first direction 8. The second electrode 6 comprises at least one electrode element 10, 12, 13. The first electrode 4 comprises one protrusion 24, extending in a direction towards the second electrode 6, for each electrode element 10, 12, 13. The electrode elements 10, 12, 13 are arranged with an interspace 16 between pairs of the electrode elements 10, 12, 13. The at least one electrode element 10, 12 comprises a gap 18 extending along a length of the at least one electrode element 10, 12. The at least one electrode element 10, 12 extends along a second direction 14 across the first direction 8.

Again, each of the electrode elements 10, 12 comprises a first electrode portion 26 which may be arranged at a first angle A to a horizontal plane H, when the EHD apparatus 2 is in use.

In these embodiments, each of the electrode elements 10, 12 comprises a second electrode portion 28 which may be arranged at a second angle B to the horizontal plane H, when the EHD apparatus 2 is in use. The first and second electrode portions 26, 28 are arranged at an obtuse angle C to each other with a vertex 30 of the obtuse angle C pointing away from the first electrode 4. The first and second electrode portions 26, 28 being arranged in this manner provide for gravity to assist water in the gap 18 to flow along the first and second electrode portions 26, 28 in the gap 18, towards respective low ends of the gap 18.

The gap 18 may form one gap which extends along both the first and second electrode portions 26, 28. Alternatively, each of the first and second electrode portions 26, 28 may be provided with one gap 18, 18'.

The gap 18 widens towards both ends 32, 32' of the gap 18, if the gap 18 extends along both the first and second electrode portions 26, 28. If each of the first and second portions 26, 28 are provided with one gap 18, 18', one end 32, 32' of each gap 18, 18' widens. The gap 18 widens towards one or both low ends 32, 32'. Thus, the capillary action on any water in the gap 18 is reduced at the low positioned wide end/s 32, 32' of the gap 18, and water may be drained from the gap 18 at its wide end/s 32, 32'.

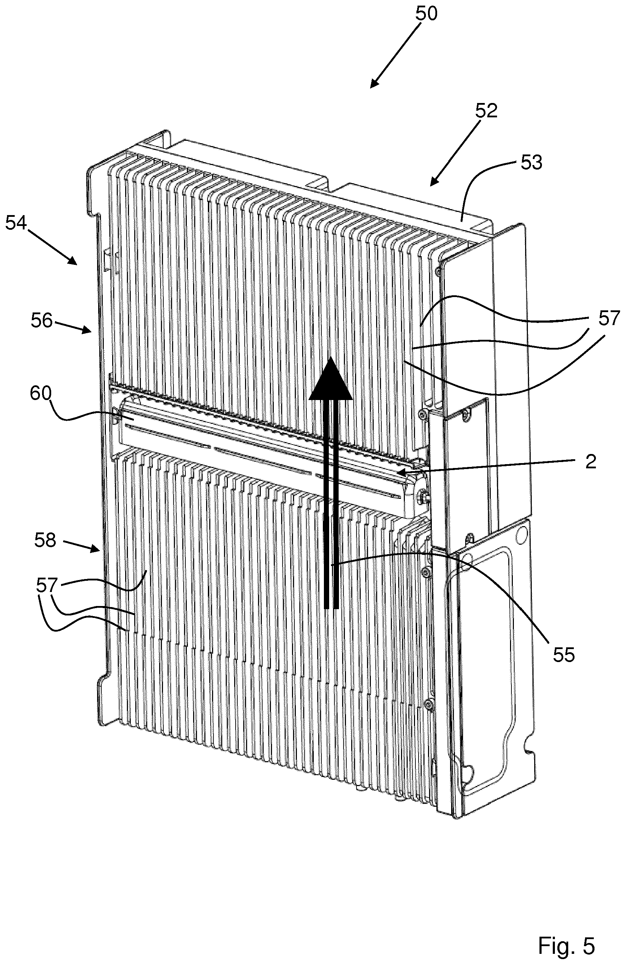

**Fig. 5** Illustrates an example of a system 50 comprising an electro hydro dynamic, EHD, apparatus 2.

The system 50 comprising heat generating electronic components 52, suitably arranged inside a housing 53. A heat sink 54 is thermally connected to the heat generating electronic components 52 and is arranged on an outside of the housing 53. The EHD apparatus 2 is an EHD apparatus according to any one of aspects and/or embodiments discussed herein. The EHD apparatus 2 is arranged to generate an airflow in a flow direction 55 along and/or through the heat sink 54. Suitably, the flow direction 55 is in an upwardly direction. Thus, natural convection at the heat sink 54 is complemented by the airflow generated by the EHD apparatus 2. In these embodiments the heat sink 54 comprises a large number of fins 57, which provide a large cooling surface to be cooled by the airflow. Thus, the EHD apparatus 2 cools the heat sink 54, which in turn conducts the heat from the heat generating electronic components 52.

The heat sink 54 comprises a first heat sink part 56 and a second heat sink part 58, and a compartment 60 for holding the EHD apparatus 2. The first heat sink part 56 is arranged above the compartment 60 and the second heat sink part 58 is arranged below the compartment 60. Thus, the EHD apparatus 2 provides a push airflow in the flow direction 55 along and/or through the first heat sink part 56 and a pull airflow along and/or through the second heat sink part 58.

The compartment 60 is open at its lower and upper sides to permit the airflow generated by the EHD apparatus 2 to pass through the compartment 60.

The EHD apparatus 2 and the compartment 60 are open in the flow direction 55 for enabling natural convection cooling of the heat sink 54. Thus, natural convection is neither obstructed by the EHD apparatus 2, nor by the compartment 60, when the EHD apparatus 2 is switched off.

The system 50 may for instance be a Remote Radio Unit, RRU, and the heat generating electronic components 52 may for instance comprise a power amplifier. The high voltage applied to the first and second electrodes of the EHD apparatus 2 may be generated by electrical components arranged inside the housing 53. Electrical conductors connect such electrical components with the first and second electrodes of the EHD apparatus 2.

The system 50 is configured for use in environments where water droplets are present, such as e.g. for outdoor use. Due to the provision of the gaps in the second electrode of the EHD apparatus 2, capillary action prevents the forming of water droplets on the second electrode, as discussed above.

Mentioned purely as an example, the EHD apparatus 2 may have a length in the first direction 8, see e.g. **Figs. 2a** **and** **4a****,** of approximately 0,3 m and may be supplied with a voltage within a range of 10 - 15 kV. Such an EHD apparatus 2 may provide an airflow within a range of 0.00378 - 0.00566 m³/s (corresponding to 3.77 - 5.66 liter/second or to 8 -12 cubic feet/minute). Such an airflow may provide a 10 W/litre air increased cooling capacity over natural convection cooling in the heat sink 54. For instance, depending on the design of the heat sink 54, a heat sink 54 may provide a natural convection cooling capacity of 30 W/litre air. With the EHD apparatus 2 switched on, the cooling capacity may be approximately 40 W/litre air.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims. For instance, and electrode element 10, 12, 13 may comprise more than one gap 18 extending in parallel with each other along the electrode element 10, 12, 13.

## Claims

1. An electro hydro dynamic apparatus (2), comprising a first electrode (4) and a second electrode (6), wherein the second electrode (6) is arranged at a predetermined distance from the first electrode (4) for generating an airflow, wherein the second electrode (6) comprises at least one electrode element (10, 12), **characterized in that** the at least one electrode element (10, 12) comprises a gap (18) extending along a length of the at least one electrode element (10, 12) for capillary conducting water droplets along the at least one electrode element (10, 12), wherein water is conducted in the gap along the at least one electrode element, to an area of the second electrode where the water may be drained from the second electrode without causing electrical breakdown.

2. The electro hydro dynamic apparatus (2) according to claim 1, wherein the at least one electrode element (10, 12) comprises a through slit (20) forming the gap (18).

3. The electro hydro dynamic apparatus (2) according to claim 1, wherein the at least one electrode element (10, 12) comprises two separate members (22, 22') forming there between the gap (18).

4. The electro hydro dynamic apparatus (2) according to any one of the preceding claims, wherein the first electrode (4) and the second electrode (6) extend along a first direction (8), and the at least one electrode element (10, 12) extends along a second direction (14) across the first direction (8), and wherein at least a portion of the gap (18) has a width in the first direction (8) within a range of 0.1 - 0.5 mm.

5. The electro hydro dynamic apparatus (2) according to any one of the preceding claims, wherein the gap (18) widens towards at least one end (32) of the gap (18).

6. The electro hydro dynamic apparatus (2) according to any one of the preceding claims, wherein the at least one electrode element (10, 12) comprises a first electrode portion (26) and a second electrode portion (28), and wherein the first and second electrode portions (26, 28) are arranged at an obtuse angle (C) to each other with a vertex (30) of the obtuse angle pointing away from the first electrode (4).

7. The electro hydro dynamic apparatus (2) according to claim 6, wherein the gap (18) widens towards a low end (32) of the gap (18).

8. The electro hydro dynamic apparatus (2) according to any one of the preceding claims, wherein the first electrode (2) comprises at least one protrusion (24, 24') extending in a direction towards the second electrode (6), setting a predetermined distance between the first and second electrodes (4, 6) for forming an electric field between the first and second electrodes (4, 6) configured to generate the airflow utilising ionised air.

9. The electro hydro dynamic apparatus (2) according to any one of the preceding claims, wherein the second electrode comprises a first electrode element (10) and a second electrode element (12), wherein the first and second electrode elements (10, 12) are arranged with an interspace (16) there between for permitting the airflow to pass through the second electrode (6).

10. A system (50) comprising heat generating electronic components (52), a heat sink (54) thermally connected to the heat generating electronic components (52), and an electro hydro dynamic apparatus (2) according to any one of the preceding claims arranged to generate an airflow in a flow direction (55) along and/or through the heat sink (54).

11. The system according to claim 10, wherein the heat sink (54) comprises a first heat sink part (56) and a second heat sink part (58), and a compartment (60) for holding the electro hydro dynamic apparatus (2), for providing a push airflow in the flow direction (55) along and/or through the first heat sink part (56) and a pull airflow along and/or through the second heat sink part (58).

12. The system according to claim 11, wherein the electro hydro dynamic apparatus (2) is open in the flow direction (55) for enabling natural convection cooling of the heat sink (54).

## Patentansprüche

1. Elektrohydrodynamische Vorrichtung (2), umfassend eine erste Elektrode (4) und eine zweite Elektrode (6), wobei die zweite Elektrode (6) in einem vorbestimmten Abstand von der ersten Elektrode angeordnet ist, (4) um einen Luftstrom zu erzeugen, wobei die zweite Elektrode (6) mindestens ein Elektrodenelement (10, 12) umfasst,
**dadurch gekennzeichnet, dass** das mindestens eine Elektrodenelement (10, 12) einen Spalt (18) umfasst, der sich entlang einer Länge des mindestens einen Elektrodenelements (10, 12) erstreckt, um Wassertröpfchen durch Kapillarwirkung entlang des mindestens einen Elektrodenelements (10, 12) zu leiten, wobei Wasser in dem Spalt entlang des mindestens einen Elektrodenelements zu einem Bereich der zweiten Elektrode geleitet wird, in dem das Wasser aus der zweiten Elektrode abgelassen werden kann, ohne einen elektrischen Durchschlag zu verursachen.

2. Elektrohydrodynamische Vorrichtung (2) nach Anspruch 1, wobei das wenigstens eine Elektrodenelement (10, 12) einem durchgehenden Schlitz (20) umfasst, der den Spalt (18) ausbildet.

3. Elektrohydrodynamische Vorrichtung (2) nach Anspruch 1, wobei das wenigstens eine Elektrodenelement (10, 12) zwei getrennte Elemente (22, 22') umfasst, zwischen denen der Spalt (18) ausgebildet ist.

4. Elektrohydrodynamische Vorrichtung (2) nach einem der vorhergehenden Ansprüche, wobei die erste Elektrode (4) und die zweite Elektrode (6) sich entlang einer ersten Richtung (8) erstrecken, und das mindestens ein Elektrodenelement (10, 12) sich entlang einer zweiten Richtung (14) über die erste Richtung (8) hinweg erstreckt, wobei mindestens ein Teil des Spaltes (18) in der ersten Richtung (8) eine Breite in einem Bereich von 0,1-0,5 mm aufweist.

5. Elektrohydrodynamische Vorrichtung (2) nach einem der vorhergehenden Ansprüche, wobei der Spalt (18) sich zu mindestens einem Ende (32) des Spaltes (18) hin weitet.

6. Elektrohydrodynamische Vorrichtung (2) nach einem der vorhergehenden Ansprüche, wobei das mindestens eine Elektrodenelement (10, 12) einen ersten Elektrodenabschnitt (26) und einen zweiten Elektrodenabschnitt (28) umfasst und wobei der erste und der zweite Elektrodenabschnitt (26, 28) in einem stumpfen Winkel (C) zueinander angeordnet sind, wobei ein Scheitelpunkt (30) des stumpfen Winkels von der ersten Elektrode (4) weg zeigt.

7. Elektrohydrodynamische Vorrichtung (2) nach Anspruch 6, wobei der Spalt (18) sich zu einem unteren Ende (32) des Spaltes (18) hin weitet.

8. Elektrohydrodynamische Vorrichtung (2) nach einem der vorhergehenden Ansprüche, wobei die erste Elektrode (2) mindestens einen Vorsprung (24, 24') umfasst, der sich in einer Richtung zu der zweiten Elektrode (6) erstreckt, welche einen vorgegebenen Abstand zwischen der ersten und der zweiten Elektrode (4, 6) einstellt, um ein elektrisches Feld zwischen der ersten und der zweiten Elektrode (4, 6) auszubilden, das dafür konfiguriert ist, unter Einsatz von ionisierter Luft den Luftstrom zu erzeugen.

9. Elektrohydrodynamische Vorrichtung (2) nach einem der vorhergehenden Ansprüche, wobei die zweite Elektrode ein erstes Elektrodenelement (10) und ein zweites Elektrodenelement (12) umfasst, wobei das erste und das zweite Elektrodenelement (10, 12) mit einem Spalt (16) dazwischen angeordnet sind, um zu ermöglichen, dass der Luftstrom durch die zweite Elektrode (6) strömt.

10. System (50), umfassend wärmeerzeugende elektronische Komponenten (52), eine thermisch mit den wärmeerzeugenden elektronischen Komponenten (52) verbundene Wärmesenke (54), und eine elektrohydrodynamische Vorrichtung (2) nach einem der vorhergehenden Ansprüche, angeordnet, einen Luftstrom in einer Strömungsrichtung (55) entlang der Wärmesenke (54) und/oder durch diese hindurch zu erzeugen.

11. System nach Anspruch 10, wobei die Wärmesenke (54) ein erstes Wärmesenkenteil (56) und ein zweites Wärmesenkenteil (58) und ein Fach (60) zum Halten der elektrohydrodynamischen Vorrichtung (2) umfasst, um einen Druckluftstrom in der Strömungsrichtung (55) entlang und/oder durch den ersten Wärmesenkenteil (56) und eines Zugluftstroms entlang und/oder durch den zweiten Wärmesenkenteil (58) bereitzustellen.

12. System nach Anspruch 11, wobei die elektrohydrodynamischen Vorrichtung (2) in der Strömungsrichtung offen ist (55), um natürliche Konvektionskühlung für die Wärmesenke (54) zu ermöglichen.

## Revendications

1. Appareil électro-hydrodynamique (2), comprenant une première électrode (4) et une seconde électrode (6), dans lequel la seconde électrode (6) est disposée à une distance prédéterminée de la première électrode (4) pour générer un flux d'air, la seconde électrode (6) comprenant au moins un élément d'électrode (10, 12),
**caractérisé en ce que** l'au moins un élément d'électrode (10, 12) comprend un espace (18) s'étendant le long de la longueur de l'au moins un élément d'électrode (10, 12) pour la conductivité capillaire de gouttelettes d'eau le long de l'au moins un élément d'électrode (10, 12), l'eau étant conduite dans l'espace le long de l'au moins un élément d'électrode, vers une zone de la seconde électrode où l'eau peut être drainée de la seconde électrode sans provoquer de panne électrique.

2. Appareil électro-hydrodynamique (2) selon la revendication 1, dans lequel l'au moins un élément d'électrode (10, 12) comprend une fente traversante (20) formant l'espace (18).

3. Appareil électro-hydrodynamique (2) selon la revendication 1, dans lequel l'au moins un élément d'électrode (10, 12) comprend deux éléments séparés (22, 22') se formant dans l'espace (18).

4. Appareil électro-hydrodynamique (2) selon l'une quelconque des revendications précédentes, dans lequel la première électrode (4) et la seconde électrode (6) s'étendent le long d'une première direction (8), et l'au moins un élément d'électrode (10, 12) s'étend le long d'une seconde direction (14) en travers de la première direction (8), et dans lequel au moins une partie de l'espace (18) présente une largeur dans la première direction (8) dans une plage de 0,1 à 0,5 mm.

5. Appareil électro-hydrodynamique (2) selon l'une quelconque des revendications précédentes, dans lequel l'espace (18) s'élargit vers au moins une extrémité (32) de l'espace (18).

6. Appareil électro-hydrodynamique (2) selon l'une quelconque des revendications précédentes, dans lequel l'au moins un élément d'électrode (10, 12) comprend une première partie d'électrode (26) et une seconde partie d'électrode (28), et dans lequel les première et seconde parties d'électrode (26, 28) sont disposées selon un angle obtus (C) l'une par rapport à l'autre avec un sommet (30) de l'angle obtus pointant à l'opposé de la première électrode (4).

7. Appareil électro-hydrodynamique (2) selon la revendication 6, dans lequel l'espace (18) s'élargit vers une extrémité basse (32) de l'espace (18).

8. Appareil électro-hydrodynamique (2) selon l'une quelconque des revendications précédentes, dans lequel la première électrode (2) comprend au moins une saillie (24, 24') s'étendant dans une direction vers la seconde électrode (6), établissant une distance prédéterminée entre les première et seconde électrodes (4, 6) pour former un champ électrique entre les première et seconde électrodes (4, 6) conçu pour générer le flux d'air au moyen d'air ionisé.

9. Appareil électro-hydrodynamique (2) selon l'une quelconque des revendications précédentes, dans lequel la seconde électrode comprend un premier élément d'électrode (10) et un second élément d'électrode (12), dans lequel les premier et second éléments d'électrode (10, 12) sont disposés avec un espace intermédiaire (16) entre eux pour permettre au flux d'air de passer à travers la seconde électrode (6).

10. Système (50) comprenant des composants électroniques générateurs de chaleur (52), un dissipateur thermique (54) relié thermiquement aux composants électroniques générateurs de chaleur (52) et un appareil électro-hydrodynamique (2) selon l'une quelconque des revendications précédentes sont agencés pour générer un flux d'air dans une direction d'écoulement (55) le long et/ou à travers le dissipateur thermique (54).

11. Système selon la revendication 10, dans lequel le dissipateur de chaleur (54) comprend une première partie de dissipateur de chaleur (56) et une seconde partie de dissipateur de chaleur (58), et un compartiment (60) pour contenir l'appareil électro-hydrodynamique (2), afin de fournir un flux d'air de poussée dans la direction d'écoulement (55) le long et/ou à travers la première partie de dissipateur de chaleur (56) et un flux d'air de traction le long et/ou à travers la seconde partie de dissipateur de chaleur (58).

12. Système selon la revendication 11, dans lequel l'appareil électro-hydrodynamique (2) est ouvert dans le sens d'écoulement (55) pour permettre un refroidissement par convection naturelle du dissipateur thermique (54).
